(19) Europäisches Patentamt / European Patent Office / Office européen des brevets

(11) **EP 3 594 641 B1**

(12) **FASCICULE DE BREVET EUROPEEN**

(45) Date de publication et mention de la délivrance du brevet:
**12.08.2020 Bulletin 2020/33**

(51) Int Cl.:
***G01H 1/00*** *(2006.01)*   ***G01M 13/028*** *(2019.01)*
***B64F 5/60*** *(2017.01)*

(21) Numéro de dépôt: **19185260.7**

(22) Date de dépôt: **09.07.2019**

(54) **PROCÉDÉ D'ANALYSE D'UN SIGNAL VIBRATOIRE ISSU D'UNE ROTATION D'AU MOINS UNE PIÈCE MOBILE APPARTENANT À UN MÉCANISME TOURNANT**

ANALYSEVERFAHREN EINES SCHWINGUNGSSIGNALS, DAS AUS EINER ROTATION MINDESTENS EINES ZU EINEM DREHMECHANISMUS GEHÖRENDEN BEWEGLICHEN TEILS ENTSTANDEN IST

METHOD FOR ANALYSING A VIBRATION SIGNAL FROM A ROTATION OF AT LEAST ONE MOVING PART BELONGING TO A ROTATING MECHANISM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2018 FR 1800739**

(43) Date de publication de la demande:
**15.01.2020 Bulletin 2020/03**

(73) Titulaire: **Airbus Helicopters**
**13725 Marignane Cedex (FR)**

(72) Inventeurs:
• **MOREL, Hervé**
  **13113 Lamanon (FR)**
• **RODRIGUEZ, Jonathan**
  **21140 Villeneuve-sous-Charigny (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 3 284 669    EP-A2- 0 889 316**
**FR-A1- 2 900 746**

• **FENG KE ET AL: "A phase angle based diagnostic scheme to planetary gear faults diagnostics under non-stationary operational conditions", JOURNAL OF SOUND AND VIBRATION, ELSEVIER, AMSTERDAM, NL, vol. 408, 21 juillet 2017 (2017-07-21), pages 190-209, XP085151706, ISSN: 0022-460X, DOI: 10.1016/J.JSV.2017.07.030**

**Description**

La présente invention concerne le domaine de l'aéronautique et plus précisément le domaine des procédés d'analyse d'un signal vibratoire généré par le fonctionnement d'un mécanisme tournant en fonction du temps, un tel mécanisme tournant équipant un aéronef, tel que par exemple un avion ou un giravion.

En effet, les aéronefs comportent généralement au moins un moteur, une chaîne cinématique de transmission d'un couple moteur et des moyens de propulsion et/ou de sustentation permettant de réaliser la propulsion, voire également la sustentation, de l'aéronef dans les airs.

Le mécanisme tournant peut alors par exemple former un train épicycloïdal appartenant à la chaine cinématique de transmission du couple moteur. Ce mécanisme tournant comporte ainsi au moins une pièce mobile en rotation autour d'un axe de rotation et ce, par rapport à un châssis de l'aéronef. La pièce mobile en rotation peut alors par exemple consister en un planétaire, un porte-satellites ou un satellite du train épicycloïdal.

Une fois l'acquisition du signal vibratoire effectuée, il peut alors être mis en œuvre des procédés de surveillance de l'usure, de la formation d'une crique ou d'une fissure et/ou d'une rupture structurale dans la ou les pièce(s) mobile(s) en rotation.

En outre, le signal vibratoire acquis peut, par rapport à un signal vibratoire idéal, présenter des parasites, du bruit ou encore d'autres défauts intrinsèques à la conception de l'aéronef et/ou à l'utilisation de l'aéronef. De tels défauts peuvent notamment consister en une distorsion faible ou forte, un décalage temporel ou une instabilité locale empêchant alors d'identifier à postériori un défaut structurel ou une usure dans la (ou les) pièce(s) mobile(s) en rotation.

De façon générale, et tel que décrit dans les documents EP 0 889 316, FR 2 900 746, EP 3284 669, US 7 325 461, US 7 363 172 et US 2011 0046929, il est connu de surveiller et d'identifier une dégradation dans un mécanisme en mesurant et en analysant un signal vibratoire de fonctionnement du mécanisme.

Cependant dans ces documents, aucune validation préalable effectuée sur le signal vibratoire pour déterminer au moins une plage d'exploitabilité n'est réalisée en amont de l'analyse proprement dite. Par conséquent, l'analyse du signal vibratoire peut se révéler erronée en ne générant aucune alerte permettant de prévenir une équipe de maintenance d'une défaillance ou d'une usure prononcée de la (ou des) pièce(s) mobile(s) et à contrario une telle analyse pourrait également générer de fausses alertes obligeant une équipe de maintenance à démonter inutilement la (ou des) pièce(s) mobile(s).

En outre, le document "A phase angle based diagnostic scheme to planetary gear faults diagnostics under non-stationary operational conditions" rédigé par les auteurs KeFeng a, KeshengWang a,n, QingNi a, MingJ.Zuo a,b, DongdongWei et publié dans le "Journal of Sound and vibration" volume 408, du 10 novembre 2017, pages 190-209, décrit un procédé d'analyse des défauts dans un mécanisme tournant en utilisant un signal vibratoire complexe et analysant un argument de ces nombres complexes obtenus à partir de ce signal vibratoire complexe. Par ailleurs, un tel argument d'un nombre complexe consiste, dans un plan complexe, en un angle exprimé en radian entre un axe des abscisses et un axe passant par un point image d'un nombre complexe issu des vibrations complexes. En outre, l'argument d'un nombre complexe est également couramment désigné par le terme de "phase" ou encore par l'expression "angle de phase".

Par suite, si le document cité ci-dessus se rapporte à l'analyse d'un angle de phase pour identifier un défaut dans un pignon de planétaire, il ne fournit cependant aucune information permettant de valider une plage d'exploitabilité d'un signal vibratoire préalablement à son analyse à proprement dit pour identifier le défaut dans ce pignon de planétaire.

La présente invention a alors pour objet de proposer un procédé d'analyse permettant de garantir l'exploitabilité ultérieure du signal vibratoire. Un tel procédé permet ainsi d'écarter certaines valeurs du signal vibratoire non exploitables ultérieurement pour permettre une identification d'un défaut structurel dans la (ou les) pièce(s) mobile(s).

Comme déjà évoqué, l'invention se rapporte donc à un procédé d'analyse d'un signal vibratoire issu d'une rotation d'au moins une pièce mobile appartenant à un mécanisme tournant formant tout ou partie d'une chaine cinématique de transmission d'un couple moteur, le mécanisme tournant équipant un aéronef, le procédé comportant :

- au moins une première étape de mesure comportant une mesure des vibrations suivant au moins une direction et générant un signal vibratoire de fonctionnement du mécanisme tournant en fonction du temps, la première étape de mesure étant réalisée au moyen d'au moins un capteur vibratoire,

- au moins une seconde étape de mesure comportant une mesure d'une position angulaire de la (ou des) pièce(s) mobile(s), la (ou les) pièce(s) mobile(s) comportant au moins un degré de liberté en rotation respectivement autour d'un axe de rotation, la ou les secondes étapes de mesure permettant de compter un nombre prédéterminé n de rotations de la (ou des) pièce(s) mobile(s) respectivement autour de l'axe de rotation.

Selon l'invention, un tel procédé est remarquable en ce qu'il comporte au moins :

- une étape de prétraitement pour calculer une pluralité d'arguments de nombres complexes générés à partir de vibrations complexes du signal vibratoire mesurées par le(s) capteur(s) vibratoire(s) sur un cycle du nombre prédéterminé n de rotations de la (ou des) pièce(s) mobile(s) respectivement autour de l'axe de rotation,

- une première étape d'analyse pour déterminer un décalage angulaire relatif à la pluralité d'arguments, la première étape d'analyse permettant de générer un premier résultat d'analyse D1, le premier résultat d'analyse D1 consistant en une condition remplie ou non remplie en fonction du décalage angulaire,

- une deuxième étape d'analyse pour déterminer une première distorsion, dite « faible distorsion » de la pluralité d'arguments, la deuxième étape d'analyse permettant de générer un deuxième résultat d'analyse D2, le deuxième résultat d'analyse D2 consistant en une condition remplie ou non remplie en fonction de la première distorsion,

- une troisième étape d'analyse pour déterminer une instabilité locale de la pluralité d'arguments, la troisième étape d'analyse permettant de générer un troisième résultat d'analyse D3, le troisième résultat d'analyse D3 consistant en une condition remplie ou non remplie en fonction de l'instabilité locale,

- une quatrième étape d'analyse pour déterminer une seconde distorsion, dite « forte distorsion », de la pluralité d'arguments, la seconde distorsion correspondant à une distorsion d'ordre supérieur et/ou d'intensité supérieure à la première distorsion, la quatrième étape d'analyse permettant de générer un quatrième résultat d'analyse D4, le quatrième résultat d'analyse D4 consistant en une condition remplie ou non remplie en fonction de la seconde distorsion, la seconde distorsion étant distincte de la première distorsion,

- une étape de validation pour déterminer au moins une plage temporelle d'exploitabilité du signal vibratoire, l'étape de validation s'opérant sous la dépendance simultanée à la fois du premier résultat d'analyse D1, du deuxième résultat d'analyse D2, du troisième résultat d'analyse D3 et du quatrième résultat d'analyse D4.

Autrement dit, un tel procédé d'analyse permet de s'assurer du caractère exploitable des données acquises représentatives du signal vibratoire. Les quatre étapes d'analyse que ce procédé comporte peuvent être effectuées simultanément en parallèle ou encore séquentiellement l'une après l'autre. De telles étapes d'analyse permettent d'écarter des plages du signal vibratoire non exploitables car comportant au moins un défaut relatif à un décalage angulaire, une faible distorsion, une instabilité locale et une forte distorsion.

Ainsi, la première étape d'analyse permet de déterminer un décalage angulaire relatif à la pluralité d'arguments. On entend par décalage angulaire, le décalage du signal de phases mesuré entre chaque révolution du rotor pendant un cycle. Pour chaque cycle du nombre prédéterminé n de rotations de la (ou des) pièce(s) mobile(s), on calcule alors un décalage angulaire suivant un axe temporel d'abscisses entre le signal vibratoire et un signal moyen. On détermine ensuite un premier résultat d'analyse D1 en fonction de la valeur du décalage angulaire calculé.

De même, la deuxième étape d'analyse permet de déterminer une faible distorsion relative à la pluralité d'arguments. On entend par faible distorsion, une déformation uniforme du signal de phases mesurée entre chaque révolution du rotor pendant un cycle. Pour chaque cycle du nombre prédéterminé n de rotations de la (ou des) pièce(s) mobile(s), on calcule alors un écart d'amplitude suivant un axe d'ordonnées entre le signal vibratoire et un signal de référence. On détermine un deuxième résultat d'analyse D2 en fonction de la valeur correspondant à cet écart d'amplitude calculé.

En outre, la troisième étape d'analyse permet de déterminer une instabilité locale relative à la pluralité d'arguments. On entend par instabilité locale, une déformation non uniforme du signal de phases mesurée entre chaque révolution du rotor pendant un cycle. Pour chaque cycle du nombre prédéterminé n de rotations de la (ou des) pièce(s) mobile(s), on calcule alors une instabilité locale à partir du signal vibratoire. On détermine un troisième résultat d'analyse D3 en fonction de la valeur de cette instabilité locale calculée.

Enfin, la quatrième étape d'analyse permet de déterminer une forte distorsion relative à la pluralité d'arguments. On entend par forte distorsion, une déformation uniforme avec apparition d'harmoniques latéraux dominants, du signal de phases, cette déformation uniforme étant mesurée entre chaque révolution du rotor pendant un cycle. Pour chaque cycle du nombre prédéterminé n de rotations de la (ou des) pièce(s) mobile(s), on calcule alors une énergie du signal vibratoire et on la compare avec une énergie moyenne. On détermine un quatrième résultat d'analyse D4 en fonction de la valeur d'énergie du signal vibratoire. Bien entendu, une telle forte distorsion correspond à une distorsion d'ordre supérieur et/ou d'intensité supérieure à celui (ou ceux) de faible distorsion.

Avantageusement, l'étape de validation peut s'opérer si le premier résultat d'analyse D1, le deuxième résultat d'analyse D2, le troisième résultat d'analyse D3 et le quatrième résultat d'analyse D4 consistent respectivement chacun en une condition non remplie.

Autrement dit, le premier résultat d'analyse D1, le deuxième résultat d'analyse D2, le troisième résultat d'analyse D3 et le quatrième résultat d'analyse D4 peuvent être formés respectivement par une variable logique pouvant avoir exclusivement deux états distincts l'un de l'autre. De plus, une telle condition non remplie peut par exemple consister en une valeur 0 ou un état "faux" en langage booléen s'opposant à une valeur 1 ou un état "vrai". Dans ce cas, l'étape de validation détermine la plage d'exploitabilité du signal vibratoire lorsque tous les résultats d'analyse D1 à D4 sont à l'état faux.

En pratique, l'étape de prétraitement, la première étape d'analyse, la deuxième étape d'analyse, la troisième étape d'analyse, la quatrième étape d'analyse et l'étape de validation peuvent être effectuées à bord de l'aéronef, l'aéronef comportant une mémoire embarquée pour enregistrer le signal vibratoire sur au moins la (ou les) plage(s) d'exploitation.

Autrement dit, un tel procédé d'analyse permet de déterminer la (ou les) plages d'exploitabilité du signal vibratoire directement en vol lors d'une mission de l'aéronef. Un tel procédé d'analyse peut alors permettre de limiter la quantité de données enregistrées dans la mémoire embarquée et n'enregistrant le signal vibratoire que sur la plage d'exploitabilité.

Selon un exemple de réalisation avantageux de l'invention, l'étape de validation peut être effectuée au sol, l'aéronef comportant une mémoire embarquée pour enregistrer constamment le signal vibratoire.

Dans ce cas, l'étape de validation peut notamment être réalisée à postériori une fois une mission de l'aéronef terminée. Toutes les données représentatives du signal vibratoire sont enregistrées dans la mémoire embarquée pour permettre de réaliser leur analyse une fois l'aéronef au sol.

Avantageusement, le procédé peut comporter une étape de transmission de données permettant une transmission des données représentatives du signal vibratoire à au moins une station sol.

Une telle étape de transmission peut donc être optionnelle lorsque l'étape de validation est effectuée à bord de l'aéronef et nécessaire lorsque l'étape de validation est effectuée au sol dans une unité de traitement disjointe de l'aéronef.

En outre, une telle étape de transmission de données peut s'opérer sous la dépendance à la fois du premier résultat d'analyse D1, du deuxième résultat d'analyse D2, du troisième résultat d'analyse D3 et du quatrième résultat d'analyse D4.

En effet, une telle étape de transmission de données peut être également liée à l'étape de validation permettant de déterminer la plage d'exploitabilité du signal vibratoire. L'étape de transmission peut ainsi s'opérer pour transmettre au sol uniquement les données exploitables du signal vibratoire.

En pratique, l'étape de prétraitement peut comporter :

- une sous étape de calcul d'une première transformée de Fourier à fenêtre glissante à partir du signal vibratoire, et
- une sous étape de calcul d'une première matrice $\mathrm{ANG}_{1 \to n}$ de n arguments $ANG_k$, k variant entre 1 et n, où n correspond à un nombre de rotations de la (ou des) pièce(s) mobile(s) respectivement autour de l'axe de rotation.

En d'autres termes, une telle étape de prétraitement, et plus particulièrement la sous étape de calcul de la première transformée de Fourier permet de fournir n cartographies arguments-fréquences dans un plan complexe. Ces cartographies sont telles que l'axe des abscisses correspond à des valeurs d'angles sur une révolution de la (ou des) pièce(s) mobile(s) formée par exemple par un porte satellites du train épicycloïdal de la boite de transmission de puissance principale de l'aéronef. L'axe des ordonnées correspond quant à lui à des valeurs de fréquences aux différents harmoniques de la première transformée de Fourier et le troisième axe de ces cartographies correspond aux valeurs d'amplitude du signal vibratoire complexe calculées à partir de la première transformée de Fourier à fenêtre glissante. En outre, par transformée de Fourier à fenêtre glissante on désigne une transformée de Fourier fenêtrée consistant à appliquer la transformée de Fourier pour chaque morceau du signal contenu dans une fenêtre considérée et à décaler la fenêtre tout le long du signal vibratoire complexe.

A partir de ce signal vibratoire complexe, on peut alors mettre en œuvre la sous étape de calcul de la première matrice $\mathrm{ANG}_{1 \to n}$ sur n révolutions de la (ou des) pièce(s) mobile(s).

Selon un exemple de réalisation avantageux de l'invention, la première étape d'analyse peut comporter :

- une sous étape de calcul d'une deuxième matrice de cosinus d'angles $P_{1 \to n}$ à partir de n valeurs de cosinus $P_k$ de la première matrice $\mathrm{ANG}_{1 \to n}$ et telles que :

$$P_k = \cos(\mathrm{ANG}_k)$$

- une sous étape de calcul d'une valeur moyenne $P_{moy}$ à partir des n valeurs de cosinus $P_k$ constituant la deuxième matrice $P_{1 \to n}$,
- une sous étape d'identification d'un signal médian $P_{med}$ par calcul de la distance Euclidienne minimale entre la valeur moyenne $P_{moy}$ et chacune des n valeurs de cosinus $P_k$ constituant la deuxième matrice $P_{1 \to n}$,
- une sous étape de calcul de n valeurs d'intercorrélations $\hat{R}_k$, tel que $\dim(\hat{R}_k) = 2Z_c - 1$, les n valeurs d'intercorrélations $\hat{R}_k$ étant calculées en effectuant un produit de convolution entre le signal médian $P_{med}$ et chacune des n valeurs de cosinus $P_k$ constituant la deuxième matrice $P_{1 \to n}$, $Z_c$ correspondant à un nombre de dents d'une couronne fixe coopérant avec la (ou les) pièce(s) mobile(s),
- une sous étape de calcul de n valeurs d'un décalage temporel $T_k$ tel que $T_k$ correspond à une abscisse d'un maximum absolu d'une courbe représentative des n valeurs d'intercorrélations $\hat{R}_k$, k variant entre 1 et n et lorsque k = $P_{med}$, $T_{P_{med}}$ = argmax($\hat{R}_{P_{med}}$) = 0,

- une sous étape de premier diagnostic générant le premier résultat d'analyse D1 consistant en une condition remplie si au moins une des n valeurs du décalage temporel $T_k$, avec k variant entre 1 et n, est supérieure à une première valeur de seuil S1 prédéterminée et inversement en une condition non remplie si toutes les n valeur du décalage temporel $T_k$ sont inférieures ou égales à la première valeur de seuil S1 prédéterminée.

En outre, la sous étape de calcul de n valeurs d'intercorrélations correspond à une corrélation croisée ou covariance croisée et permet de façon classique de déterminer une mesure de la similitude entre deux signaux.

De plus, la sous étape de premier diagnostic consiste à comparer les différentes valeurs du décalage temporel $T_k$ avec la première valeur de seuil S1 prédéterminée. Une telle première valeur de seuil S1 prédéterminée est donc déterminée par des essais ou par simulation et est mémorisée dans une unité de stockage. Si nécessaire, il est ainsi possible de modifier la sévérité de cette sous étape de premier diagnostic en diminuant ou en augmentant la première valeur de seuil S1. En effet, plus la première valeur de seuil S1 est faible et plus le premier résultat d'analyse D1 a de chance de consister en une condition remplie et inversement plus la première valeur de seuil S1 est grande et plus le premier résultat d'analyse D1 a de chance de consister en une condition non remplie.

Avantageusement, la deuxième étape d'analyse peut comporter :

- une sous étape de recalage des n valeurs de cosinus $P_k$ constituant la deuxième matrice $P_{1\to n}$ d'un nombre correspondant aux n valeurs d'un décalage temporel $T_k$ pour générer une troisième matrice $C_{1\to n}$ de n valeurs recalées $C_k$ avec k variant entre 1 et n,
- une sous étape de calcul d'une deuxième transformée de Fourier à partir du signal médian $P_{med}$,
- une sous étape de calcul d'une valeur d'argument moyenne $\varphi_{moy}$ pour un harmonique prédéterminé $H_m$ de la deuxième transformée de Fourier, la valeur d'argument moyenne $\varphi_{moy}$ étant telle que :

$$\varphi_{moy} = atan2(y,x) = Arg(x+iy)$$

où $x = Re(Hm)$ est une partie réelle de l'harmonique prédéterminé $H_m$ de la deuxième transformée de Fourier et,
$y = Im(Hm)$ est une partie imaginaire de l'harmonique prédéterminé $H_m$ de la deuxième transformée de Fourier,

- une sous étape de calcul de n valeurs d'un argument de référence $P_{ref}$ tel que $P_{ref} = A\cdot\cos(\omega t+\varphi_{moy})$, avec le coefficient A = 1 et la pulsation $\omega = \dfrac{2\cdot\pi\cdot p}{Z_C}$,

- une sous étape de comparaison entre les n valeurs recalées $C_k$ constituant la troisième matrice $C_{1\to n}$ et les n valeurs de l'argument de référence $P_{ref}$, la sous étape de comparaison générant n valeurs d'écart $I_k$ telles que :

$$I_k = \sum |C_k - P_{ref}|$$

avec k variant entre 1 et n,

- une sous étape de calcul d'une distorsion normalisée EC telle que :

$$EC = \frac{\sum_{k=1}^{n} I_k}{2\cdot n\cdot Z_C}$$

- une sous étape de deuxième diagnostic générant le deuxième résultat d'analyse D2 consistant en une condition remplie si la distorsion normalisée EC est supérieure à une deuxième valeur de seuil S2 prédéterminée et inversement une condition non remplie si la distorsion normalisée EC est inférieure ou égale à la deuxième valeur de seuil S2 prédéterminée.

Par suite, la sous étape de deuxième diagnostic consiste à comparer les différentes valeurs de distorsion normalisée EC avec la deuxième valeur de seuil S2 prédéterminée. Une telle deuxième valeur de seuil S2 prédéterminée peut donc également être déterminée par des essais ou par simulation et être mémorisée dans une unité de stockage. Si nécessaire, il est ainsi possible de modifier la sévérité de cette sous étape de deuxième diagnostic en diminuant ou en augmentant la deuxième valeur de seuil S2. En effet, plus la deuxième valeur de seuil S2 est faible et plus le deuxième résultat d'analyse D2 a de chance de consister en une condition remplie et inversement plus la deuxième valeur de seuil S2 est grande et plus le deuxième résultat d'analyse D2 a de chance de consister en une condition non remplie.

En pratique, la troisième étape d'analyse peut comporter :

- une sous étape de transformation de tout ou partie des n arguments $ANG_k$ constituant la première matrice $ANG_{1\to n}$ pour générer une quatrième matrice $Pc_{1\to n}$ de valeurs transformées $Pc_k$, les n arguments $ANG_k$ correspondant à des angles définis entre $\pi$ radians et $-\pi$ radians et les n valeurs transformées $Pc_k$ à des angles multiples de $2\pi$ radians,
- une sous étape de calcul d'une variance V à partir des n valeurs transformées $Pc_k$ constituant la qua-

trième matrice $Pc_{1 \to n}$, la variance V comportant une dimension telle que dim(V) = $Z_c$, $Z_c$ étant le nombre de dents de la couronne fixe coopérant avec la (ou les) pièce(s) mobile(s),

- une sous étape de troisième diagnostic générant le troisième résultat d'analyse D3 consistant en une condition remplie si une valeur maximale de la variance V est supérieure à une troisième valeur de seuil S3 prédéterminée et inversement en une condition non remplie si une valeur maximale de la variance V est inférieure ou égale à la troisième valeur de seuil S3 prédéterminée.

Comme précédemment, la sous étape de troisième diagnostic consiste à comparer la valeur maximale de la variance V avec la troisième valeur de seuil S3 prédéterminée. Une telle troisième valeur de seuil S3 prédéterminée peut donc également être déterminée par des essais ou par simulation et être mémorisée dans une unité de stockage. Si nécessaire, il est ainsi possible de modifier la sévérité de cette sous étape de troisième diagnostic en diminuant ou en augmentant la troisième valeur de seuil S3. En effet, plus la troisième valeur de seuil S3 est faible et plus le troisième résultat d'analyse D3 a de chance de consister en une condition remplie et inversement plus la troisième valeur de seuil S3 est grande et plus le troisième résultat d'analyse D3 a de chance de consister en une condition non remplie.

Selon un exemple de réalisation avantageux de l'invention, la quatrième étape d'analyse peut comporter :

- une sous étape de calcul d'une pluralité de n transformées de Fourier à partir des n valeurs recalées $C_k$ constituant la troisième matrice $C_{1 \to n}$ la sous étape de calcul permettant de générer une cinquième matrice $A_{1 \to n}$ d'amplitudes $A_k$ aux ordres $o \in [0,10]$,
- une sous étape de calcul d'une somme des énergies de modulation $E_{band}$ aux ordres distincts de l'ordre p, telle que :

$$E_{band} = \sum_{k=1 \to n} \sum_{o \neq p} A_k(o)$$

- une sous étape de calcul d'une somme des énergies $E_p$ telle que :

$$E_p = \sum_{k=1 \to n} A_k(p)$$

- une sous étape de quatrième diagnostic générant le quatrième résultat d'analyse D4 consistant en une condition remplie si un rapport $\dfrac{E_{band}}{E_p}$ est supérieur à une quatrième valeur de seuil S4 prédéterminée et inversement en une condition non remplie si le rapport $\dfrac{E_{band}}{E_p}$ est inférieur ou égal à la quatrième valeur de seuil S4 prédéterminée.

Ainsi, la sous étape de quatrième diagnostic consiste à comparer les différentes valeurs du rapport $\dfrac{E_{band}}{E_p}$ avec la quatrième valeur de seuil S4 prédéterminée. Une telle quatrième valeur de seuil S4 prédéterminée peut donc également être déterminée par des essais ou par simulation et être mémorisée dans une unité de stockage. Si nécessaire, il est ainsi possible de modifier la sévérité de cette sous étape de quatrième diagnostic en diminuant ou en augmentant la quatrième valeur de seuil S4. En effet, plus la quatrième valeur de seuil S4 est faible et plus le quatrième résultat

d'analyse D4 a des chances de consister en une condition remplie et inversement plus la quatrième valeur de seuil S4 est grande et plus le quatrième résultat d'analyse D a des chances de consister en une condition non remplie.

L'invention et ses avantages apparaîtront avec plus de détails dans le cadre de la description qui suit avec des exemples donnés à titre illustratif en référence aux figures annexées qui représentent :

- la figure 1, une vue de côté d'un aéronef et d'une station sol pour la mise en œuvre du procédé d'analyse conforme à l'invention,

- la figure 2, un schéma de principe illustrant une première variante du procédé d'analyse conforme à l'invention,

- la figure 3, un schéma de principe illustrant une seconde variante du procédé d'analyse conforme à l'invention,

- la figure 4, un schéma de principe illustrant différentes sous étapes d'une étape de prétraitement du procédé d'analyse conforme à l'invention,

- la figure 5, un schéma de principe illustrant différentes sous étapes d'une première étape d'analyse du procédé d'analyse conforme à l'invention,

- la figure 6, un schéma de principe illustrant différentes sous étapes d'une deuxième étape d'analyse du procédé d'analyse conforme à l'invention,

- la figure 7, un schéma de principe illustrant différentes sous étapes d'une troisième étape d'analyse du procédé d'analyse conforme à l'invention, et

- la figure 8, un schéma de principe illustrant différentes sous étapes d'une quatrième étape d'analyse du procédé d'analyse conforme à l'invention.

Les éléments présents dans plusieurs figures distinctes sont affectés d'une seule et même référence.

Comme déjà évoqué, l'invention se rapporte à un procédé d'analyse d'un signal vibratoire issu d'une rotation d'au moins une pièce mobile.

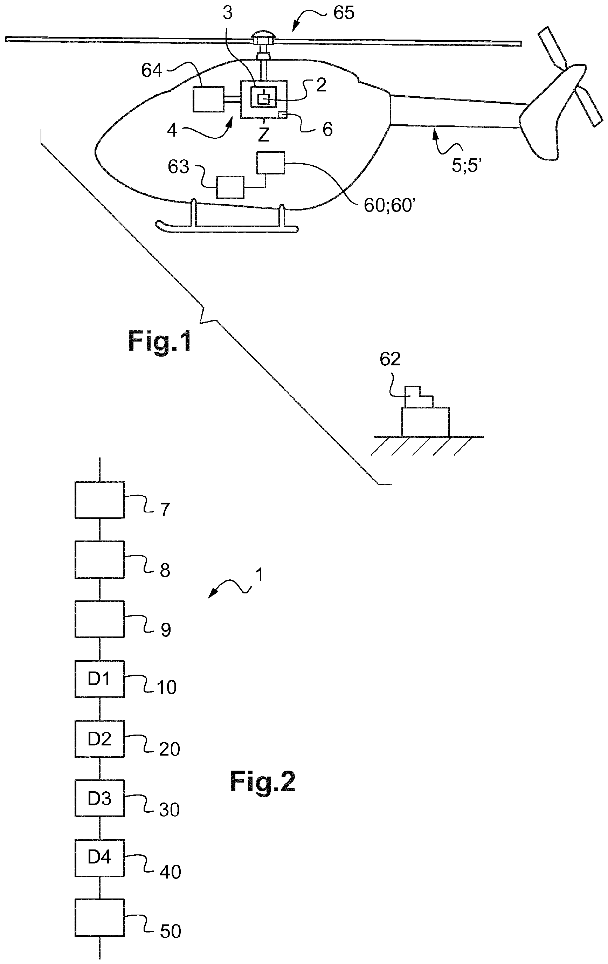

Telle(s) que représentée(s) à la figure 1, la (ou les) pièce(s) mobile(s) 2 est(sont) agencée(s) dans un aéronef 5, 5' et forme(nt) tout ou partie d'un mécanisme tournant 3 d'une chaine cinématique 4 de transmission de puissance. Un telle chaine cinématique 4 est donc agencée entre un moteur 64 et au moins un rotor 65 permettant de réaliser une sustentation, voire également une propulsion, de l'aéronef 5, 5' dans l'air.

La (ou les) pièce(s) mobile(s) 2 comporte(nt) respectivement au moins un degré de liberté en rotation d'axe de rotation Z. La (ou les) pièce(s) mobile(s) 2 peu(ven)t être formée(s) par exemple par un planétaire, un porte satellites ou un satellite d'un train épicycloïdal formant le mécanisme tournant 3.

En outre, l'aéronef 5, 5' comporte au moins un capteur vibratoire 6 permettant d'effectuer des mesures des vibrations suivant au moins une direction et de générer un signal vibratoire de fonctionnement du mécanisme tournant 3 en fonction du temps.
Un tel aéronef 5, 5' peut également comporter une mémoire embarquée 60, 60' permettant d'enregistrer en tout ou partie ce signal vibratoire de fonctionnement du mécanisme tournant 3.

Optionnellement, l'aéronef 5, 5' peut aussi comporter une unité de transmission de données 63 pour transmettre des données représentatives du signal vibratoire de fonctionnement du mécanisme tournant 3 à au moins une station sol 62. Une telle transmission des données représentatives du signal vibratoire peut bien entendu s'effectuer au sol lors d'un retour de mission de l'aéronef 5, 5' ou encore pendant une mission de l'aéronef 5, 5' lors d'une phase de vol de l'aéronef 5, 5'.

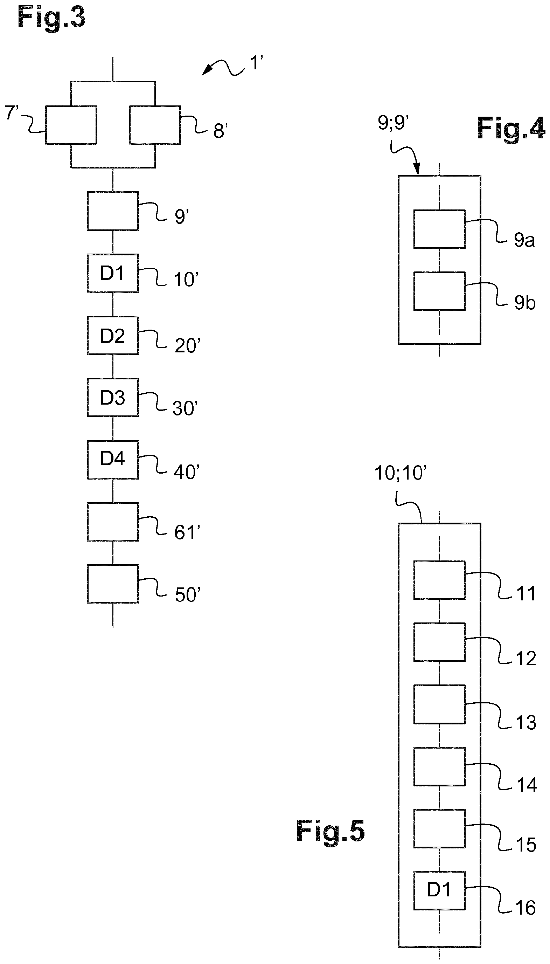

Tel que représenté aux figures 2 et 3, le procédé d'analyse 1, 1' du signal vibratoire issu de la rotation de la (ou des) pièce(s) mobile(s) 2 comporte donc au moins une première étape de mesure 7, 7' permettant de réaliser la mesure des vibrations suivant au moins une direction et générant le signal vibratoire de fonctionnement du mécanisme tournant 3 en fonction du temps et au moins une seconde étape de mesure 8, 8' permettant de réaliser une mesure d'une position angulaire de la (ou des) pièce(s) mobile(s) 2.

Tel que représenté à la figure 2 selon un premier exemple de réalisation, la (ou les) première(s) étape(s) de mesure 7 et la (ou les) seconde(s) étape(s) de mesure 8 peuvent être mises en œuvre l'une (les unes) après l'autre (les autres).

Tel que représenté à la figure 3 selon un second exemple de réalisation, la (ou les) première(s) étape(s) de mesure 7' et la (ou les) seconde(s) étape(s) de mesure 8' peuvent être mises en œuvre simultanément ou en parallèle l'une (les unes) avec l'autre (les autres).

De plus, le procédé d'analyse 1, 1' comporte une étape de prétraitement 9, 9' pour calculer une pluralité d'arguments de nombres complexes générés à partir de vibrations complexes du signal vibratoire mesurées par le(s) capteur(s) vibratoire(s) 6 sur un cycle d'un nombre prédéterminé n de rotations de la (ou des) pièce(s) mobile(s) 2 respectivement autour de l'axe de rotation Z.

Le procédé d'analyse 1, 1' comporte ensuite une première étape d'analyse 10, 10' pour déterminer un décalage angulaire relatif à la pluralité d'arguments, la première étape d'analyse 10, 10' permettant de générer un premier résultat d'analyse D1. En outre, un tel premier résultat d'analyse D1 consiste en une condition remplie ou non remplie en fonction du décalage angulaire.

Un tel procédé d'analyse 1, 1' comporte également une deuxième étape d'analyse 20, 20' pour déterminer une faible distorsion de la pluralité d'arguments, cette deuxième étape d'analyse 20, 20' permettant de générer un deuxième résultat d'analyse D2. Un tel deuxième résultat d'analyse D2 consiste alors en une condition remplie ou non remplie en fonction de la faible distorsion.

Le procédé d'analyse 1, 1' comporte alors une troisième étape d'analyse 30, 30' pour déterminer une instabilité locale de la pluralité d'arguments, la troisième étape d'analyse 30, 30' permettant de générer un troisième résultat d'analyse D3. Ce troisième résultat d'analyse D3 consiste également en une condition remplie ou non remplie en fonction de l'instabilité locale.

Par ailleurs, le procédé d'analyse 1, 1' comporte une quatrième étape d'analyse 40, 40' pour déterminer une forte distorsion de la pluralité d'arguments, cette quatrième étape d'analyse 40, 40' permettant de générer un quatrième résultat d'analyse D4. Comme précédemment, le quatrième résultat d'analyse D4 consiste en une condition remplie ou non remplie en fonction de la forte distorsion.

Enfin, le procédé d'analyse 1, 1' comporte une étape de validation 50, 50' pour déterminer au moins une plage d'exploitabilité du signal vibratoire, l'étape de validation 50, 50' s'opérant sous la dépendance simultanée à la fois du premier résultat d'analyse D1, du deuxième résultat d'analyse D2, du troisième résultat d'analyse D3 et du quatrième résultat d'analyse D4.

Par ailleurs tel que représenté à la figure 3, le procédé 1' peut comporter également une étape de transmission de données 61' permettant une transmission des données représentatives du signal vibratoire à la (ou les) station(s) sol 62. Une telle étape de transmission 61' peut alors permettre de réaliser l'étape de validation 50' en dehors de l'aéronef 5'. Pour ce faire, une mémoire embarquée 60' permet d'enregistrer constamment le signal vibratoire à bord de l'aéronef 5'.

Telle que représentée à la figure 4, l'étape de prétraitement 9, 9' peut comporter une sous étape de calcul 9a d'une première transformée de Fourier à fenêtre glissante à partir du signal vibratoire. Par ailleurs, l'étape de prétraitement 9, 9' peut également comporter une sous étape de calcul 9b d'une première matrice $ANG_{1 \mapsto n}$ de n arguments $ANG_k$, k variant entre 1 et n, où n correspond à un nombre de rotations de la (ou des) pièce(s) mobile(s) 2 respectivement autour de l'axe de rotation Z.

Telle que représentée à la figure 5, la première étape d'analyse 10, 10' peut comporter une sous étape de calcul 11 d'une deuxième matrice de cosinus d'angles $P_{1 \to n}$ à partir de n valeurs de cosinus $P_k$ de ladite première matrice $ANG_{1 \to n}$ et telles que $P_k = \cos(ANG_k)$.

Une telle première étape d'analyse 10, 10' peut alors également comporter une sous étape de calcul 12 d'une valeur moyenne $P_{moy}$ à partir des n valeurs de cosinus $P_k$ constituant la deuxième matrice $P_{1 \to n}$ puis une sous étape d'identification 13 d'un signal médian $P_{med}$ par calcul de la distance Euclidienne minimale entre la valeur moyenne $P_{moy}$ et chacune des n valeurs de cosinus $P_k$ constituant la deuxième matrice $P_{1 \to n}$,

Par ailleurs, la première étape d'analyse 10, 10' peut comporter une sous étape de calcul 14 de n valeurs d'intercorrélations $\hat{R}_k$, tel que $\dim(\hat{R}_k) = 2Z_c - 1$, les n valeurs d'intercorrélations $\hat{R}_k$ étant calculées en effectuant un produit de convolution entre le signal médian $P_{med}$ et chacun desdits n valeurs de cosinus $P_k$ constituant la deuxième matrice $P_{1 \to n}$, $Z_c$ correspondant à un nombre de dents d'une couronne fixe du train épicycloïdal coopérant avec la (ou les) pièce(s) mobile(s) 2.

La première étape d'analyse 10, 10' peut comporter ensuite une sous étape de calcul 15 de n valeurs d'un décalage temporel $T_k$ tel que $T_k$ correspond à une abscisse d'un maximum absolu d'une courbe représentative des n valeurs d'intercorrélations $\hat{R}_k$, k variant entre 1 et n et lorsque $k = P_{med}$, $T_{P_{med}} = argmax(\hat{R}_{P_{med}}) = 0$.

Enfin, la première étape d'analyse 10, 10' peut comporter une sous étape de premier diagnostic 16 permettant de générer le premier résultat d'analyse D1 consistant en une condition remplie si au moins une des n valeurs du décalage temporel $T_k$, avec k variant entre 1 et n, est supérieure à une première valeur de seuil S1 prédéterminée et inversement en une condition non remplie si toutes les n valeurs du décalage temporel $T_k$ sont inférieures ou égales à la première valeur de seuil S1 prédéterminée.

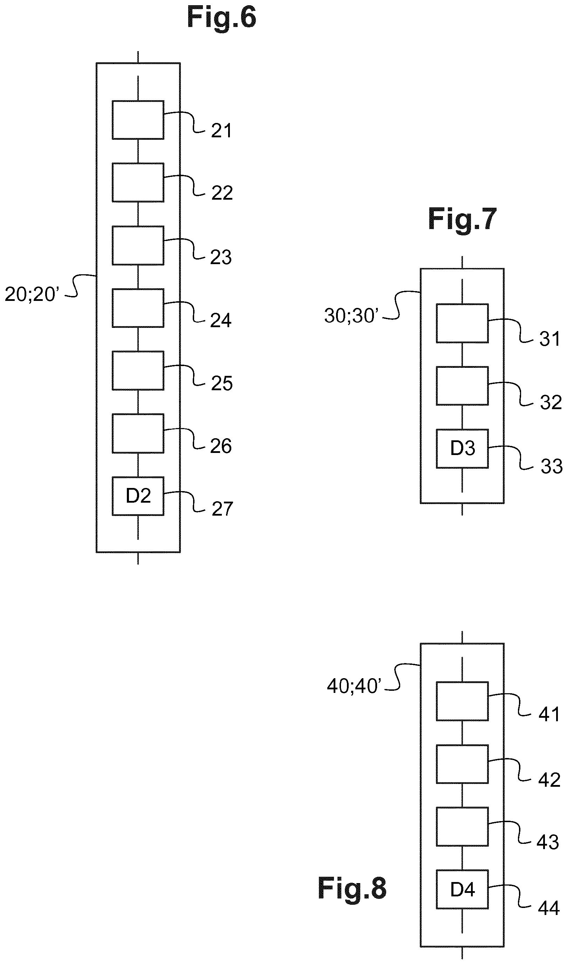

Telle que représentée à la figure 6, la deuxième étape d'analyse 20, 20' peut comporter une sous étape de recalage 21 des n valeurs de cosinus $P_k$ constituant la deuxième matrice $P_{1 \to n}$ d'un nombre correspondant aux n valeurs d'un décalage temporel $T_k$ pour générer une troisième matrice $C_{1 \to n}$ de n valeurs recalées $C_k$ avec k variant entre 1 et n.

La deuxième étape d'analyse 20, 20' peut comporter ensuite une sous étape de calcul 22 d'une deuxième transformée de Fourier à fenêtre glissante à partir du signal médian $P_{med}$ puis une sous étape de calcul 23

d'une valeur d'argument moyenne $\varphi_{moy}$ pour un harmonique prédéterminé $H_m$ de la deuxième transformée de Fourier, la valeur d'argument moyenne $\varphi_{moy}$ étant telle que :

$$\varphi_{moy} = atan2(y, x) = Arg(x + iy)$$

où $x = Re(Hm)$ est une partie réelle de l'harmonique prédéterminé $H_m$ de la deuxième transformée de Fourier et $y = Im(Hm)$ est une partie imaginaire de l'harmonique prédéterminé $H_m$ de la deuxième transformée de Fourier.

La deuxième étape d'analyse 20, 20' peut alors également comporter une sous étape de calcul 24 de n valeurs d'un argument de référence $P_{ref}$ tel que $P_{ref} = A \cdot \cos(\omega t + \varphi_{moy})$, avec le coefficient $A = 1$ et la pulsation $\omega = \dfrac{2 \cdot \pi \cdot p}{Z_c}$.

Par ailleurs, une telle deuxième étape d'analyse 20, 20' peut comporter une sous étape de comparaison 25 entre les n valeurs recalées $C_k$ constituant la troisième matrice $C_{1 \to n}$ et les n valeurs de l'argument de référence $P_{ref}$, une telle sous étape de comparaison générant alors n valeurs d'écart $I_k$ telles que $I_k = \Sigma|C_k - P_{ref}|$, avec k variant entre 1 et n.

Par suite, la deuxième étape d'analyse 20, 20' peut comporter une sous étape de calcul 26 d'une distorsion normalisée EC définie par la formule :

$$EC = \frac{\sum_{k=1}^{n} I_k}{2 \cdot n \cdot Z_C}$$

Enfin, la deuxième étape d'analyse 20, 20' peut comporter une sous étape de deuxième diagnostic 27 générant le deuxième résultat d'analyse D2 consistant en une condition remplie si la distorsion normalisée EC est supérieure à une deuxième valeur de seuil S2 prédéterminée et inversement une condition non remplie si la distorsion normalisée EC est inférieure ou égale à la deuxième valeur de seuil S2 prédéterminée.

En outre telle que représentée à la figure 7, la troisième étape d'analyse 30, 30' peut tout d'abord comporter une sous étape de transformation 31 de tout ou partie des n arguments $ANG_k$ constituant la première matrice $ANG_{1 \mapsto n}$ pour générer une quatrième matrice $Pc_{1 \to n}$ de valeurs transformées $Pc_k$, les n arguments $ANG_k$ correspondant à des angles définis entre $\pi$ radians et $-\pi$ radians et les n valeurs transformées $Pc_k$ à des angles multiples de $2\pi$ radians.

La troisième étape d'analyse 30, 30' peut ensuite comporter une sous étape de calcul 32 d'une variance V à partir des n valeurs transformées $Pc_k$ constituant la quatrième matrice $Pc_{1 \to n}$, avec $\dim(V) = Z_c$ et enfin une sous étape de troisième diagnostic 33 générant le troisième résultat d'analyse D3 consistant en une condition remplie si une valeur maximale de la variance V est supérieure à une troisième valeur de seuil S3 prédéterminée et inversement en une condition non remplie si une valeur maximale de la variance V est inférieure ou égale à la troisième valeur de seuil S3 prédéterminée.

Enfin telle que représentée à la figure 8, la quatrième étape d'analyse 40, 40' peut comporter une sous étape de calcul 41 d'une pluralité de n transformées de Fourier à partir des n valeurs recalées $C_k$ constituant la troisième matrice $C_{1 \to n}$, cette sous étape de calcul 41 permettant de générer une cinquième matrice $A_{1 \to n}$ d'amplitudes $A_k$ aux ordres $o \in [0,10]$.

La quatrième étape d'analyse 40, 40' peut comporter ensuite une sous étape de calcul 42 d'une somme des énergies de modulation $E_{band}$ aux ordres distincts de l'ordre p, telle que :

$$E_{band} = \sum_{k=1 \to n} \sum_{o \neq p} A_k(o)$$

Une telle quatrième étape d'analyse 40, 40' peut comporter une sous étape de calcul 43 d'une somme des énergies $E_p$ telle que :

$$E_p = \sum_{k=1 \to n} A_k(p)$$

Enfin, la quatrième étape d'analyse 40, 40' peut comporter une sous étape de quatrième diagnostic 44 générant le quatrième résultat d'analyse D4 consistant en une condition remplie si un rapport $\dfrac{E_{band}}{E_p}$ est supérieur à une quatrième valeur de seuil S4 prédéterminée et inversement en une condition non remplie si le rapport $\dfrac{E_{band}}{E_p}$ est inférieur ou égal à la quatrième valeur de seuil S4 prédéterminée.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est définie par les revendications.

**Revendications**

1. Procédé d'analyse (1, 1') d'un signal vibratoire issu d'une rotation d'au moins une pièce mobile (2) appartenant à un mécanisme tournant (3) formant tout ou partie d'une chaine cinématique de transmission (4) d'un couple moteur, ledit mécanisme tournant (3) équipant un aéronef (5, 5'), ledit procédé (1, 1') comportant :

   • au moins une première étape de mesure (7, 7') comportant une mesure des vibrations suivant au moins une direction et générant un signal vibratoire de fonctionnement dudit mécanisme tournant (3) en fonction du temps, ladite première étape de mesure (7, 7') étant réalisée au moyen d'au moins un capteur vibratoire (6),
   • au moins une seconde étape de mesure (8, 8') comportant une mesure d'une position angulaire de ladite au moins une pièce mobile (2), ladite au moins une pièce mobile (2) comportant au moins un degré de liberté en rotation respectivement autour d'un axe de rotation Z, ladite au moins une seconde étape de mesure (8, 8') permettant de compter un nombre prédéterminé n de rotations de ladite au moins une pièce mobile (2) respectivement autour dudit axe de rotation Z,

   **caractérisé en ce que** ledit procédé (1, 1') comporte au moins :

   • une étape de prétraitement (9, 9') pour calculer une pluralité d'arguments de nombres complexes générés à partir de vibrations complexes dudit signal vibratoire mesurées par ledit au moins un capteur vibratoire (6) sur un cycle dudit nombre prédéterminé n de rotations de ladite au moins une pièce mobile (2) respectivement autour dudit axe de rotation Z,
   • une première étape d'analyse (10, 10') pour déterminer un décalage angulaire relatif à ladite pluralité d'arguments, ladite première étape d'analyse (10, 10') permettant de générer un premier résultat d'analyse D1, ledit premier résultat d'analyse D1 consistant en une condition remplie ou non remplie en fonction dudit décalage angulaire,
   • une deuxième étape d'analyse (20, 20') pour déterminer une première distorsion, dite « faible distorsion », de ladite pluralité d'arguments, ladite deuxième étape d'analyse (20, 20') permettant de générer un deuxième résultat d'analyse D2, ledit deuxième résultat d'analyse D2 consistant en une condition remplie ou non remplie en fonction de ladite première distorsion,
   • une troisième étape d'analyse (30, 30') pour déterminer une instabilité locale de ladite pluralité d'arguments, ladite troisième étape d'analyse (30, 30') permettant de générer un troisième résultat d'analyse D3, ledit troisième résultat d'analyse D3 consistant en une condition remplie ou non remplie en fonction de ladite instabilité locale,
   • une quatrième étape d'analyse (40, 40') pour déterminer une seconde distorsion, dite « forte distorsion », de ladite pluralité d'arguments, la seconde distorsion correspondant à une distorsion d'ordre supérieur et/ou d'intensité supérieure à la première distorsion, ladite quatrième étape d'analyse (40, 40') permettant de générer un quatrième résultat d'analyse D4, ledit quatrième résultat d'analyse D4 consistant en une condition remplie ou non remplie en fonction de ladite seconde distorsion, ladite seconde distorsion étant distincte de ladite première distorsion,
• une étape de validation (50, 50') pour déterminer au moins une plage temporelle d'exploitabilité dudit signal vibratoire, ladite étape de validation (50, 50') s'opérant sous la dépendance simultanée à la fois dudit premier résultat d'analyse D1, dudit deuxième résultat d'analyse D2, dudit troisième résultat d'analyse D3 et dudit quatrième résultat d'analyse D4.

**2.** Procédé selon la revendication 1,
**caractérisé en ce que** ladite étape de validation (50, 50') s'opère si ledit premier résultat d'analyse D1, ledit deuxième résultat d'analyse D2, ledit troisième résultat d'analyse D3 et ledit quatrième résultat d'analyse D4 consistent respectivement chacun en une condition non remplie.

**3.** Procédé selon l'une quelconque des revendications 1 à 2,
**caractérisé en ce que** ladite étape de prétraitement (9), ladite première étape d'analyse (10), ladite deuxième étape d'analyse (20), ladite troisième étape d'analyse (30), ladite quatrième étape d'analyse (40) et ladite étape de validation (50) sont effectuées à bord de l'aéronef (5), ledit aéronef (5) comportant une mémoire embarquée (60) pour enregistrer ledit signal vibratoire sur au moins ladite au moins une plage d'exploitabilité.

**4.** Procédé selon l'une quelconque des revendications 1 à 2,
**caractérisé en ce que** ladite étape de validation (50') est effectuée au sol, ledit aéronef (5') comportant une mémoire embarquée (60') pour enregistrer constamment ledit signal vibratoire.

**5.** Procédé selon l'une quelconque des revendications 1 à 4,
**caractérisé en ce que** ledit procédé (1') comporte une étape de transmission de données (61') permettant une transmission des données représentatives dudit signal vibratoire à au moins une station sol (62).

**6.** Procédé selon la revendication 5,
**caractérisé en ce que** ladite étape de transmission de données (61') s'opère sous la dépendance à la fois dudit premier résultat d'analyse D1, dudit deuxième résultat d'analyse D2, dudit troisième résultat d'analyse D3 et dudit quatrième résultat d'analyse D4.

**7.** Procédé selon l'une quelconque des revendications 1 à 6
**caractérisé en ce que** ladite étape de prétraitement (9, 9') comporte :

• une sous étape de calcul (9a) d'une première transformée de Fourier à fenêtre glissante à partir dudit signal vibratoire, et
• une sous étape de calcul (9b) d'une première matrice $ANG_{1 \mapsto n}$ de n arguments $ANG_k$, k variant entre 1 et n, où n correspond à un nombre de rotations de ladite au moins une pièce mobile (2) respectivement autour dudit axe de rotation Z.

**8.** Procédé selon la revendication 7,
**caractérisé en ce que** ladite première étape d'analyse (10, 10') comporte :

• une sous étape de calcul (11) d'une deuxième matrice de cosinus d'angles $P_{1 \to n}$ à partir de n valeurs de cosinus $P_k$ de ladite première matrice $ANG_{1 \to n}$ et telles que :

$$P_k = \cos(ANG_k)$$

• une sous étape de calcul (12) d'une valeur moyenne $P_{moy}$ à partir desdites n valeurs de cosinus $P_k$ constituant ladite deuxième matrice $P_{1 \to n}$
• une sous étape d'identification (13) d'un signal médian $P_{med}$ par calcul de la distance Euclidienne minimale entre ladite valeur moyenne $P_{moy}$ et chacune desdites n valeurs de cosinus $P_k$ constituant ladite deuxième matrice $P_{1 \to n}$,
• une sous étape de calcul (14) de n valeurs d'intercorrélations $\hat{R}_k$, tel que $\dim(\hat{R}_k) = 2Z_c - 1$, lesdites n valeurs d'intercorrélations $\hat{R}_k$ étant calculées en effectuant un produit de convolution entre ledit signal médian $P_{med}$ et chacune desdites n valeurs de cosinus $P_k$ constituant ladite deuxième matrice $P_{1 \to n}$, $Z_c$ correspondant à un nombre de dents d'une couronne fixe coopérant avec ladite au moins une pièce mobile (2),
• une sous étape de calcul (15) de n valeurs d'un décalage temporel $T_k$ tel que $T_k$ correspond à une abscisse d'un maximum absolu d'une courbe représentative desdites n valeurs d'intercorrélations $\hat{R}_k$, k variant entre 1 et n et lorsque k $= P_{med}$, $T_{P_{med}} = \mathrm{argmax}(\hat{R}_{P_{med}}) = 0$,
• une sous étape de premier diagnostic (16) générant ledit premier résultat d'analyse D1 consistant en une condition remplie si au moins une desdites n valeurs dudit décalage temporel $T_k$, avec k variant entre 1 et n, est supérieure à une première valeur de seuil S1 prédéterminée et inversement en une condition non remplie si toutes les n valeurs dudit décalage temporel $T_k$ sont inférieures ou égales à ladite première valeur de seuil S1 prédéterminée.

**9.** Procédé selon la revendication 8,
**caractérisé en ce que** ladite deuxième étape d'analyse (20, 20') comporte :

• une sous étape de recalage (21) desdites n valeurs de cosinus $P_k$ constituant ladite deuxième matrice $P_{1 \to n}$ d'un nombre correspondant auxdites n valeurs d'un décalage temporel $T_k$ pour générer une troisième matrice $C_{1 \to n}$ de n valeurs recalées $C_k$ avec k variant entre 1 et n,
• une sous étape de calcul (22) d'une deuxième transformée de Fourier à fenêtre glissante à partir dudit signal médian $P_{med}$,
• une sous étape de calcul (23) d'une valeur d'argument moyenne $\varphi_{moy}$ pour un harmonique prédéterminé $H_m$ de la deuxième transformée de Fourier, la valeur d'argument moyenne $\varphi_{moy}$ étant telle que :

$$\varphi_{moy} = atan2(y, x) = Arg(x + iy)$$

où $x = Re(Hm)$ est une partie réelle de l'harmonique prédéterminé $H_m$ de la deuxième transformée de Fourier et,
$y = Im(Hm)$ est une partie imaginaire de l'harmonique prédéterminé $H_m$ de la deuxième transformée de Fourier,

• une sous étape de calcul (24) de n valeurs d'un argument de référence $P_{ref}$ tel que $P_{ref} = A \cdot \cos(\omega t + \varphi_{moy})$, avec le coefficient A = 1 et la pulsation $\omega = \frac{2 \cdot \pi \cdot p}{z_C}$,

• une sous étape de comparaison (25) entre lesdites n valeurs recalées $C_k$ constituant ladite troisième matrice $C_{1 \to n}$ et lesdites n valeurs dudit argument de référence $P_{ref}$, ladite sous étape de comparaison générant n valeurs d'écart $I_k$ telles que :

$$I_k = \sum |C_k - P_{ref}|$$

avec k variant entre 1 et n,
• une sous étape de calcul (26) d'une distorsion normalisée EC telle que :

$$EC = \frac{\sum_{k=1}^{n} I_k}{2 \cdot n \cdot Z_C}$$

• une sous étape de deuxième diagnostic (27) générant ledit deuxième résultat d'analyse D2 consistant en une condition remplie si ladite distorsion normalisée EC est supérieure à une deuxième valeur de seuil S2 prédéterminée et inversement une condition non remplie si ladite distorsion normalisée EC est inférieure ou égale à ladite deuxième valeur de seuil S2 prédéterminée.

**10.** Procédé selon l'une quelconque des revendications 7 à 9,
**caractérisé en ce que** ladite troisième étape d'analyse (30, 30') comporte :

• une sous étape de transformation (31) de tout ou partie desdits n arguments $ANG_k$ constituant ladite première matrice $ANG_{1 \to n}$ pour générer une quatrième matrice $Pc_{1 \to n}$ de valeurs transformées $Pc_k$, lesdits n arguments $ANG_k$ correspondant à des angles définis entre $\pi$ radians et $-\pi$ radians et lesdites n valeurs transformées $Pc_k$ à des angles multiples de $2\pi$ radians,
• une sous étape de calcul (32) d'une variance V à partir desdites n valeurs transformées $Pc_k$ constituant ladite quatrième matrice $Pc_{1 \to n}$, ladite variance V comportant une dimension telle que dim(V) = $Z_c$, $Z_c$ étant ledit nombre de dents de ladite couronne fixe coopérant avec ladite au moins une pièce mobile (2),
• une sous étape de troisième diagnostic (33) générant ledit troisième résultat d'analyse D3 consistant en une condition remplie si une valeur maximale de ladite variance V est supérieure à une troisième valeur de seuil S3 prédéterminée et inversement en une condition non remplie si une valeur maximale de ladite variance V est inférieure ou égale à ladite troisième valeur de seuil S3 prédéterminée.

**11.** Procédé selon l'une quelconque des revendications 9 à 10,
**caractérisé en ce que** ladite quatrième étape d'analyse (40, 40') comporte :

• une sous étape de calcul (41) d'une pluralité de n transformées de Fourier à partir desdites n valeurs recalées $C_k$ constituant ladite troisième matrice $C_{1 \to n}$, ladite sous étape de calcul (41) permettant de générer une cinquième matrice $A_{1 \to n}$ d'amplitudes $A_k$ aux ordres $o \in [0,10]$,
• une sous étape de calcul (42) d'une somme des énergies de modulation E<sub>band</sub> aux ordres distincts de l'ordre p, telle que :

$$E_{band} = \sum_{k=1 \to n} \sum_{o \neq p} A_k(o)$$

• une sous étape de calcul (43) d'une somme des énergies E<sub>p</sub> telle que :

$$E_p = \sum_{k=1 \to n} A_k(p)$$

• une sous étape de quatrième diagnostic (44) générant ledit quatrième résultat d'analyse D4 consistant en une condition remplie si un rapport

$$\frac{E_{band}}{E_p}$$

est supérieur à une quatrième valeur de seuil S4 prédéterminée et inversement en une

$$\frac{E_{band}}{E_p}$$

condition non remplie si ledit rapport est inférieur ou égal à ladite quatrième valeur de seuil S4 prédéterminée.

**Patentansprüche**

1. Verfahren (1, 1') zum Analysieren eines Schwingungssignals, das aus einer Drehung mindestens eines beweglichen Teils (2) resultiert, das zu einem Drehmechanismus (3) gehört, der eine ganze kinematische Übertragungskette (4) zur Übertragung eines Motordrehmoments oder einen Teil davon bildet, wobei der Drehmechanismus (3) zur Ausrüstung eines Luftfahrzeugs (5, 5') gehört, wobei das Verfahren (1, 1') umfasst:

• mindestens einen ersten Messschritt (7, 7'), der eine Messung der Schwingungen in mindestens einer Richtung umfasst und ein Betriebsschwingungssignal des Drehmechanismus (3) in Abhängigkeit von der Zeit erzeugt, wobei der erste Messschritt (7, 7') mittels mindestens eines Schwingungssensors (6) durchgeführt wird,
• mindestens einen zweiten Messschritt (8, 8'), der eine Messung einer Winkelposition des mindestens einen beweglichen Teils (2) umfasst, wobei das mindestens eine bewegliche Teil (2) mindestens einen Drehfreiheitsgrad jeweils um eine Drehachse Z aufweist, wobei der mindestens eine zweite Messschritt (8, 8') es ermöglicht, eine vorbestimmte Anzahl n von Umdrehungen des mindestens einen beweglichen Teils (2) jeweils um die Drehachse Z zu zählen,

**dadurch gekennzeichnet, dass** das Verfahren (1, 1') mindestens umfasst:

• einen Vorverarbeitungsschritt (9, 9') zum Berechnen einer Mehrzahl von Argumenten von komplexen Zahlen, die aus komplexen Schwingungen des durch den mindestens einen Schwingungssensor (6) gemessenen Schwingungssignals über einen Zyklus mit der vorgegebenen Anzahl n von Umdrehungen des mindestens einen beweglichen Teils (2) jeweils um die Drehachse Z erzeugt werden,
• einen ersten Analyseschritt (10, 10') zum Bestimmen eines Winkelversatzes relativ zu der Mehrzahl von Argumenten, wobei der erste Analyseschritt (10, 10') es ermöglicht, ein erstes Analyseergebnis D1 zu erzeugen, wobei das erste Analyseergebnis D1 aus einer in Abhängigkeit von dem Winkelversatz erfüllten oder nicht erfüllten Bedingung besteht,
• einen zweiten Analyseschritt (20, 20') zum Bestimmen einer ersten Verzerrung, als "geringe Verzerrung" bezeichnet, der genannten Mehrzahl von Argumenten, wobei der genannte zweite Analyseschritt (20, 20') es ermöglicht, ein zweites Analyseergebnis D2 zu erzeugen, wobei das zweite Analyseergebnis D2 aus einer in Abhängigkeit von der genannten ersten Verzerrung erfüllten oder nicht erfüllten Bedingung besteht,
• einen dritten Analyseschritt (30, 30') zum Bestimmen einer lokalen Instabilität der Mehrzahl von Argumenten, wobei der dritte Analyseschritt (30, 30') es ermöglicht, ein drittes Analyseergebnis D3 zu erzeugen, wobei das dritte Analyseergebnis D3 aus einer in Abhängigkeit von der lokalen Instabilität erfüllten oder nicht erfüllten Bedingung besteht,
• einen vierten Analyseschritt (40, 40') zum Bestimmen einer zweiten Verzerrung, als starke Verzerrung" bezeichnet, der Mehrzahl von Argumenten, wobei die zweite Verzerrung einer Verzerrung höherer Ordnung und/oder höherer Intensität als die erste Verzerrung entspricht, wobei der vierte Analyseschritt (40, 40') es ermöglicht, ein viertes Analyseergebnis D4 zu erzeugen, wobei das vierte Analyseergebnis D4 aus einer in Abhängigkeit von der zweiten Verzerrung erfüllten oder nicht erfüllten Bedingung besteht, wobei sich die zweite Verzerrung von der ersten Verzerrung unterscheidet,
• einen Validierungsschritt (50, 50') zum Bestimmen mindestens eines Nutzbarkeits-Zeitbereichs des Schwingungssignals, wobei der Validierungsschritt (50, 50') in gleichzeitiger Abhängigkeit von dem ersten Analyseergebnis D1, dem zweiten Analyseergebnis D2, dem dritten Analyseergebnis D3 und dem vierten Analyseergebnis D4 stattfindet.

**2.** Verfahren nach Anspruch 1,
**dadurch gekennzeichnet, dass** der Validierungsschritt (50, 50') ausgeführt wird, wenn das erste Analyseergebnis D1, das zweite Analyseergebnis D2, das dritte Analyseergebnis D3 und das vierte Analyseergebnis D4 jeweils aus einer nicht erfüllten Bedingung bestehen.

**3.** Verfahren nach einem der Ansprüche 1 bis 2,
**dadurch gekennzeichnet, dass** der Vorverarbeitungsschritt (9), der erste Analyseschritt (10), der zweite Analyseschritt (20), der dritte Analyseschritt (30), der vierte Analyseschritt (40) und der Validierungsschritt (50) an Bord des Luftfahrzeugs (5) durchgeführt werden, wobei das Luftfahrzeug (5) einen Bordspeicher (60) zur Aufzeichnung des Schwingungssignals über mindestens den mindestens einen Nutzbarkeitsbereich umfasst.

**4.** Verfahren nach einem der Ansprüche 1 bis 2,
**dadurch gekennzeichnet, dass** der Validierungsschritt (50') am Boden durchgeführt wird, wobei das Luftfahrzeug (5') einen Bordspeicher (60') zur ständigen Aufzeichnung des Vibrationssignals umfasst.

**5.** Verfahren nach einem der Ansprüche 1 bis 4,
**dadurch gekennzeichnet, dass** das Verfahren (1') einen Datenübertragungsschritt (61') umfasst, der die Übertragung von für das Vibrationssignal repräsentativen Daten an mindestens eine Bodenstation ermöglicht (62).

**6.** Verfahren nach Anspruch 5,
**dadurch gekennzeichnet, dass** der Datenübertragungsschritt (61') in Abhängigkeit von sowohl dem ersten Analyseergebnis D1, dem zweiten Analyseergebnis D2, dem dritten Analyseergebnis D3 und dem vierten Analyseergebnis D4 ausgeführt wird.

**7.** Verfahren nach einem der Ansprüche 1 bis 6,
**dadurch gekennzeichnet, dass** der Vorverarbeitungsschritt (9, 9') umfasst:

• einen Unterschritt (9a) des Berechnens einer ersten Gleitfenster-Fourier-Transformation aus dem Schwingungssignal, und
• einen Unterschritt (9b) des Berechnens einer ersten Matrix $ANG_{1 \to n}$ mit n Argumenten $ANG_k$, wobei k zwischen 1 und n variiert, wobei n einer Anzahl von Umdrehungen des mindestens einen beweglichen Teils (2) jeweils um die Drehachse Z entspricht.

**8.** Verfahren nach Anspruch 7,
**dadurch gekennzeichnet, dass** der erste Analyseschritt (10, 10') umfasst :

• einen Unterschritt des Berechnens (11) einer zweiten Matrix von Winkelkosinus $P_{1 \to n}$ aus n Kosinuswerten $P_k$ der ersten Matrix $ANG_{1 \to n}$ und derart, dass :

$$P_k = \cos(ANG_k)$$

• einen Unterschritt des Berechnens (12) eines Mittelwertes $P_{moy}$ aus den n Kosinuswerten $P_k$, die die zweite Matrix $P_{1 \to n}$ bilden,
• einen Unterschritt des Identifizierens (13) eines Mediansignals $P_{med}$ durch Berechnen des minimalen euklidischen Abstands zwischen dem Mittelwert $P_{moy}$ und jedem der n Kosinuswerte $P_k$, die die zweite Matrix $P_{1 \to n}$ bilden,
• einen Unterschritt des Berechnens (14) von n Interkorrelationswerten $\hat{R}_k$, so dass $\dim(\hat{R}_k)$ = $2Z_c$ - 1, wobei die n Interkorrelationswerte $\hat{R}_k$ berechnet werden, indem ein Faltungsprodukt zwischen dem Mediansignal $P_{med}$ und jedem der n Kosinuswerte $P_k$, die die zweite Matrix $P_{1 \to n}$ bilden, durchgeführt wird, wobei $Z_C$ einer Anzahl von Zähnen eines festen Kranzes entspricht, der mit dem mindestens einen beweglichen Teil (2) zusammenwirkt,
• einen Unterschritt des Berechnens (15) von n Werten einer Zeitverschiebung $T_k$ derart, dass $T_k$ einer Abszisse eines absoluten Maximums einer Kurve entspricht, die repräsentativ für die n Interkorrelationswerte $\hat{R}_k$ ist, wobei k zwischen 1 und n variiert und wenn $k=P_{med}$, $T_{P_{med}}$ = argmax($\hat{R}_{P_{med}}$) = 0 ist,
• einen ersten Diagnose-Unterschritt (16), der das erste Analyseergebnis D1 erzeugt, das aus einer erfüllten Bedingung besteht, wenn mindestens einer der n Werte der Zeitverschiebung $T_k$, wobei k zwischen 1 und n variiert, größer als ein erster vorgegebener Schwellenwert S1 ist, und umgekehrt aus einer nicht erfüllten Bedingung besteht, wenn alle n Werte der Zeitverschiebung $T_k$ kleiner oder gleich dem ersten vorgegebenen Schwellenwert S1 sind.

**9.** Verfahren nach Anspruch 8,
**dadurch gekennzeichnet, dass** der zweite Analyseschritt (20, 20') umfasst :

• einen Unterschritt (21) des Änderns (21) der n Kosinuswerte $P_k$, die die zweite Matrix $P_{1 \to n}$ bilden, von einem Wert, der den n Werten einer Zeitverschiebung Tk entspricht, um eine dritte Matrix $C_{1 \to n}$ mit n Änderungswerten $C_k$ zu erzeugen, wobei k zwischen 1 und n variiert,
• einen Unterschritt des Berechnens (22) einer zweiten Gleitfenster-Fourier-Transformation aus dem Mediansignal $P_{med}$,
• einen Unterschritt des Berechnens (23) eines

mittleren Argumentwertes $\varphi_{moy}$ für eine vorgegebene Harmonische $H_m$ der zweiten Fourier-Transformation, wobei der mittlere Argumentwert $\varphi_{moy}$ so ist, dass :

$$\varphi_{moy} = atan2(y,x) = Arg(x+iy)$$

wobei wobei $x=Re(Hm)$ ein Realteil der vorgegebenen Harmonischen $H_m$ der zweiten Fourier-Transformation und $y=Im(Hm)$ ein Imaginärteil der vorgegebenen Harmonischen $H_m$ der zweiten Fourier-Transformation ist,
• einen Unterschritt des Berechnens (24) von n Werten eines Referenzarguments $P_{ref}$,so dass

$$P_{ref} = A \cdot \cos\left(\omega t + \varphi_{moy}\right)$$

mit Koeffizient A=1 und Pulsation

$$\omega = \frac{2 \cdot \pi \cdot p}{Z_C}$$

gilt,
• einen Unterschritt des Vergleichens (25) zwischen den n veränderten Werten $C_k$, die die dritte Matrix $C_{1 \to n}$ bilden, und den n Werten des Referenzarguments $P_{ref}$, wobei der Unterschritt des Vergleichens n Abweichungswerte $I_k$ derart ergibt, dass

$$I_k = \sum |C_k - P_{ref}|,$$

wobei k zwischen 1 und n variiert,
• einen Unterschritt des Berechnens (26) einer normierten Verzerrung EC derart, dass :

$$EC = \frac{\sum_{k=1}^{n} I_k}{2 \cdot n \cdot Z_C},$$

• einen zweiten Diagnose-Unterschritt (27), der das zweite Analyseergebnis D2 erzeugt, das aus einer erfüllten Bedingung besteht, wenn die normierte Verzerrung EC größer als ein zweiter vorbestimmter Schwellenwert S2 ist, und umgekehrt aus einer nicht erfüllten Bedingung besteht, wenn die normierte Verzerrung EC kleiner oder gleich dem zweiten vorbestimmten Schwellenwert S2 ist.

10. Verfahren nach einem der Ansprüche 7 bis 9, **dadurch gekennzeichnet, dass** der dritte Analyseschritt (30, 30') umfasst :

• einen Unterschritt des Transformierens (31) aller oder eines Teils der n Argumente $ANG_k$, die die erste Matrix $ANG_{1 \to n}$ bilden, um eine vierte Matrix $Pc_{1 \to n}$ von transformierten Werten $Pc_k$ zu erzeugen, wobei die n Argumente $ANG_k$ Winkeln entsprechen, die zwischen $\pi$ Bogenmaß und $-\pi$ Bogenmaß definiert sind, und die n transformierten Werte $Pc_k$ Winkeln entsprechen, die Vielfache von $2\pi$ Bogenmaß sind,
• einen Unterschritt (32) des Berechnens einer Varianz V aus den n transformierten Werten $Pc_k$, die die vierte Matrix $Pc_{1 \to n}$ bilden, wobei die Varianz V eine solche Dimension aufweist, dass dim(V)=$Z_C$, wobei $Z_C$ die Anzahl der Zähne des festen Kranzes ist, der mit dem mindestens einen beweglichen Teil (2) zusammenwirkt,
• einen dritten Diagnose-Unterschritt (33), der das dritte Analyseergebnis D3 erzeugt, das aus einer erfüllten Bedingung besteht, wenn ein Maximalwert der Varianz V größer als ein vorbestimmter dritter Schwellenwert S3 ist, und umgekehrt aus einer nicht erfüllten Bedingung besteht, wenn ein Maximalwert der Varianz V kleiner oder gleich dem vorbestimmten dritten Schwellenwert S3 ist.

11. Verfahren nach einem der Ansprüche 7 bis 9, **dadurch gekennzeichnet, dass** der vierte Analyseschritt (40, 40') umfasst :

• einen Unterschritt des Berechnens (41) einer Mehrzahl von n Fourier-Transformationen aus den n veränderten Werten $C_k$, die die dritte Matrix $C_{1 \to n}$ bilden, wobei der Unterschritt des Berechnens (41) es ermöglicht, eine fünfte Matrix $A_{1 \to n}$ von Amplituden $A_k$ mit Ordnungen $o \in [0,10]$ zu erzeugen,
• einen Unterschritt des Berechnens (42) einer Summe der Modulationsenergien $E_{band}$ in den von der Ordnung p verschiedenen Ordnungen, so dass

$$E_{band} = \sum_{k=1 \to n} \sum_{o \neq p} A_k(o)$$

• einen Unterschritt des Berechnens (43) einer Summe der Energien $E_p$, so dass

$$E_p = \sum_{k=1 \to n} A_k(p)$$

• einen vierten Diagnose-Unterschritt (44), der das vierte Analyseergebnis D4 erzeugt, das aus einer erfüllten Bedingung besteht, wenn ein Verhältnis

$$\frac{E_{band}}{E_p}$$

größer als ein vorbestimmter vierter Schwellenwert S4 ist, und umgekehrt aus einer nicht erfüllten Bedingung besteht, wenn das Verhältnis

$$\frac{E_{band}}{E_p}$$

kleiner oder gleich dem vorgegebenen vierten Schwellenwert S4 ist.

## Claims

1. Method (1, 1') for analysing a vibration signal resulting from a rotation of at least one moving part (2) belonging to a rotating mechanism (3) forming all or part of a kinematic transmission chain (4) for transmitting an engine torque, said rotary mechanism (3) equipping an aircraft (5, 5'), said method (1, 1') comprising:

   • at least one first measurement step (7, 7') comprising a measurement of the vibrations in at least one direction and generating a vibration signal for the operation of said rotary mechanism (3) as a function of time, said first measurement step (7, 7') being produced by means of at least one vibration sensor (6),
   • at least one second measurement step (8, 8') comprising a measurement of an angular position of said at least one movable part (2), said at least one movable part (2) comprising at least one degree of rotational freedom in each case about an axis of rotation Z, said at least one second measurement step (8, 8') making it possible to count a predetermined number n of rotations of said at least one movable part (2) in each case about said axis of rotation Z,

   **characterised in that** said method (1, 1') comprises at least:

   • a pre-processing step (9, 9') for calculating a plurality of complex number arguments generated from complex vibrations of said vibration signal measured by said at least one vibration sensor (6) over a cycle of said predetermined number n of rotations of said at least one movable part (2) in each case about said axis of rotation Z,
   • a first analysis step (10, 10') for determining an angular offset relative to said plurality of arguments, said first analysis step (10, 10') making it possible to generate a first analysis result D1, said first analysis result D1 consisting of a condition that is met or not met as a function of said angular offset,
   • a second analysis step (20, 20') for determining a first distortion, called "low distortion," of said plurality of arguments, said second analysis step (20, 20') making it possible to generate a second analysis result D2, said second analysis result D2 consisting of a condition that is met or not met as a function of said first distortion,
   • a third analysis step (30, 30') for determining a local instability of said plurality of arguments, said third analysis step (30, 30') making it possible to generate a third analysis result D3, said third result analysis D3 consisting of a condition that is met or not met as a function of said local instability,
   • a fourth analysis step (40, 40') for determining a second distortion, called "strong distortion," of said plurality of arguments, the second distortion corresponding to a distortion of higher order and/or of greater intensity than the first distortion, said fourth analysis step (40, 40') making it possible to generate a fourth analysis result D4, said fourth analysis result D4 consisting of a condition that is met or not met as a function of said second distortion, said second distortion being distinct from said first distortion,
   • a validation step (50, 50') for determining at least one time range for usability of said vibration signal, said validation step (50, 50') operating under the simultaneous dependency on said first analysis result D1, said second analysis result D2, said third analysis result D3 and said fourth analysis result D4.

2. Method according to claim 1, **characterised in that** said validation step (50, 50') takes place if said first analysis result D1, said second analysis result D2, said third analysis result D3 and said fourth analysis result D4 each consist of an unmet condition.

3. Method according to either claim 1 or claim 2, **characterised in that** said pre-processing step (9), said first analysis step (10), said second analysis step (20), said third analysis step (30), said fourth analysis step (40) and said validation step (50) are carried out on board the aircraft (5), said aircraft (5) comprising an on-board memory (60) for recording said vibration signal over at least said at least one usable range.

4. Method according to either claim 1 or claim 2, **characterised in that** said validation step (50') is carried out on the ground, said aircraft (5') comprising an on-board memory (60') for constantly recording said vibration signal.

5. Method according to any of claims 1 to 4, **characterised in that** said method (1') comprises a data transmission step (61') allowing the data representative of said vibration signal to be sent to at least one ground station (62).

6. Method according to claim 5, **characterised in that** said data transmission step (61') takes place while being simultaneously dependent on said first analysis result D1, said second analysis result D2, said third analysis result D3 and said fourth analysis result D4.

7. Method according to any of claims 1 to 6, **characterised in that** said pre-processing step (9, 9') comprises:

   • a sub-step (9a) of calculating a first sliding window Fourier transform from said vibration signal, and
   • a sub-step (9b) of calculating a first matrix $ANG_{1\rightarrow n}$ of n arguments $ANG_k$, k varying between 1 and n, where n corresponds to a number of rotations of said at least one moving part (2) in each case about said axis of rotation Z.

8. Method according to claim 7, **characterised in that** said first analysis step (10, 10') comprises:

   • a sub-step (11) of calculating a second cosine matrix of angles $P_{1\rightarrow n}$ from n cosine values $P_k$ of said first matrix $ANG_{1\rightarrow n}$ and such that:

   $$P_k = \cos(ANG_k)$$

   • a sub-step (12) of calculating a mean value $P_{moy}$ from said n cosine values $P_k$ making up said second matrix $P_{1\rightarrow n}$,
   • a sub-step (13) of identifying a median signal $P_{med}$ by calculating the minimum Euclidean distance between said mean value $P_{moy}$ and each of said n cosine values $P_k$ making up said second matrix $P_{1\rightarrow n}$,
   • a sub-step (14) of calculating n intercorrelation values $\hat{R}_k$, such that $\dim(\hat{R}_k) = 2Z_c - 1$, said n intercorrelation values $\hat{R}_k$ being calculated by carrying out a convolution product between said median signal $P_{med}$ and each of said n cosine values $P_k$ making up said second matrix $P_{1\rightarrow n}$, $Z_c$ corresponding to a number of teeth of a fixed crown engaging with said at least one moving part (2),
   • a sub-step (15) of calculating n values of a time offset $T_k$ such that $T_k$ corresponds to an abscis-

sa of an absolute maximum of a curve representative of said n intercorrelation values $\hat{R}_k$, k varying between 1 and n and when k = $P_{med}$, $T_{P_{med}} = \text{argmax}(\hat{R}_{P_{med}}) = 0$,
   • a first diagnostic sub-step (16) generating said first analysis result D1 consisting of a condition that is met if at least one of said n values of said time offset $T_k$, with k varying between 1 and n, is greater than a first predetermined threshold value S1, and, vice versa, consisting of a condition that is not met if all of the n values of said time offset $T_k$ are less than or equal to said first predetermined threshold value S1.

9. Method according to claim 8, **characterised in that** said second analysis step (20, 20') comprises:

   • a sub-step (21) of recalibrating said n cosine values $P_k$ making up said second matrix $P_{1\rightarrow n}$ by a number corresponding to said n values of a time offset $T_k$ in order to generate a third matrix $C_{1\rightarrow n}$ of n recalibrated values $C_k$ with k varying between 1 and n,
   • a sub-step (22) of calculating a second sliding window Fourier transform from said median signal $P_{med}$,
   • a sub-step (23) of calculating an average argument value ($\varphi_{moy}$ for a predetermined harmonic $H_m$ of the second Fourier transform, the average argument value $\varphi_{moy}$ being such that:

   $$\varphi_{moy} = atan2(y, x) = Arg(x + iy)$$

   where x = $Re(Hm)$ is a real part of the predetermined harmonic $H_m$ of the second Fourier transform, and y = $Im(Hm)$ is an imaginary part of the predetermined harmonic $H_m$ of the second Fourier transform,
   • a sub-step (24) of calculating n values of a reference point $P_{ref}$ such that $P_{ref} = A\cos(\omega t + \varphi_{moy})$, with the coefficient A = 1 and the pulsation

   $$\omega = \frac{2.\pi.p}{z_c},$$

   • a sub-step (25) of comparing said n recalibrated values $C_k$ making up said third matrix $C_{1\rightarrow n}$ and said n values of said reference argument $P_{ref}$, said comparison sub-step generating n deviation values $l_k$, such that:

   $$l_k = \sum |c_k - P_{ref}|$$

   with k varying between 1 and n,
   • a sub-step (26) of calculating a normalised distortion EC such that:

$$EC = \frac{\sum_{k=1}^{n} l_k}{2 \cdot n \cdot Z_c}$$

• a second diagnostic sub-step (27) generating said second analysis result D2 consisting of a condition that is met if said normalised distortion EC is greater than a second predetermined threshold value S2, and, vice versa, consisting of a condition that is not met if said normalised distortion EC is less or equal to said second predetermined threshold value S2.

10. Method according to any of claims 7 to 9, **characterised in that** said third analysis step (30, 30') comprises:

   • a sub-step (31) of transforming all or part of said $n$ arguments $ANG_k$ making up said first matrix $ANG_{1 \to n}$ in order to generate a fourth matrix $Pc_{1 \to n}$ of transformed values $Pc_k$, said $n$ arguments $ANG_k$ corresponding to defined angles between $\pi$ radians and $-\pi$ radians and said $n$ transformed values $Pc_k$ corresponding to angles that are multiples of $2\pi$ radians,
   • a sub-step (32) of calculating a variance V from said $n$ transformed values $Pc_k$ making up said fourth matrix $Pc_{1 \to n}$, said variance V comprising a dimension such that $\dim(V) = Z_c$, $Z_c$ being said number of teeth of said fixed crown engaging with said at least one movable part (2),
   • a third diagnostic sub-step (33) generating said third analysis result D3 consisting of a condition that is met if a maximum value of said variance V is greater than a third predetermined threshold value S3, and, vice versa, consisting of a condition that is not met if a maximum value of said variance V is less than or equal to said third predetermined threshold value S3.

11. Method according to either claim 9 or claim 10, **characterised in that** said fourth analysis step (40, 40') comprises:

   • a sub-step (41) of calculating a plurality of $n$ Fourier transforms from said $n$ recalibrated values $C_k$ making up said third matrix $C_{1 \to n}$, said calculating sub-step (41) making it possible to generate a fifth matrix $A_{1 \to n}$ of amplitudes $A_k$ at orders $o \in [0.10]$,
   • a sub-step (42) of calculating a sum of the modulation energies $E_{band}$ at distinct orders of order $p$, such that:

$$E_{band} = \sum_{k=1 \to n} \sum_{o \neq p} A_k(o)$$

• a sub-step (43) of calculating a sum of the energies $E_p$, such that:

$$E_p = \sum_{k=1 \to n} A_k(p)$$

• a fourth diagnostic sub-step (44) generating said fourth analysis result D4 consisting of a condition that is met if a ratio $\dfrac{E_{band}}{E_p}$ is greater than a fourth predetermined threshold value S4, and, vice versa, consisting of a condition that is not met if said ratio $\dfrac{E_{band}}{E_p}$ is less than or equal to said fourth predetermined threshold value S4.

**Fig.1**

**Fig.2**

# Fig.3

1'

7'

8'

9'

D1 10'

D2 20'

D3 30'

D4 40'

61'

50'

# Fig.4

9;9'

9a

9b

# Fig.5

10;10'

11

12

13

14

15

D1 16

## Fig.6

20;20'

21
22
23
24
25
26
D2  27

## Fig.7

30;30'

31
32
D3  33

## Fig.8

40;40'

41
42
43
D4  44

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0889316 A
- FR 2900746
- EP 3284669 A
- US 7325461 B
- US 7363172 B
- US 20110046929 A

**Littérature non-brevet citée dans la description**

- **KEFENG A ; KESHENGWANG A,N ; QINGNI A ; MINGJ.ZUO A,B ; DONGDONGWEI.** A phase angle based diagnostic scheme to planetary gear faults diagnostics under non-stationary operational conditions. *Journal of Sound and vibration,* 10 Novembre 2017, vol. 408, 190-209